# EUROPEAN PATENT APPLICATION

(11) **EP 1 228 689 A1**
(43) Date of publication of application: **07.08.2002**
(21) Application number: 02002113.5
(22) Date of filing: 29.01.2002
(51) Int. Cl.: A01N 37/10, A01N 31/08, A01N 65/00

(54) **New formulations for the sanitisation and hygienisation of houses**

(30) Priority: 31.01.2001 IT MI010174
(71) Applicant: B.B.& M.T.ITALIA S.a.s. Di Bergomi Maurizio, 25123 Brescia (IT)
(72) Inventor: Bergomi, Maurizio, 25040 Cividate Camuno (BS) (IT)
(74) Representative: Gervasi, Gemma, Dr.

(57) **Abstract**

Sanitising and hygienising compositions for houses containing a 2-isopropyl-5-methylphenol/benzyl benzoate binary mixture as active ingredient, suitable for inhibiting and removing fungi, bacteria, mites, and moulds.

## Description

### State of the art

In the last few years, houses in industrialised countries have experienced an increase in allergenic and antihygienic pollutants as a result of their being better insulated for energy saving requirements. Therefore, because of their higher degree of humidity, heat, and insufficient ventilation, they have become an ideal ground for the proliferation of said pollutants: bacteria, moulds, fungi, and mites. In particular, the presence, proliferation and survival of dust mites or dermatofagoids are considerably affected by climatic factors, such as a high degree of relative humidity and temperature, and by hygienic-environmental factors, such as the presence of bacteria, moulds and fungi--basic components of the dust mite diet--in moquettes, carpets, mattresses, pillows, and tapestries for upholstery--curtains, armchairs, sofas, etc.--as well as in all dust receptacles of the house, such as corners, brackets, shelves.

Said "indoor" pollutants have favoured an increase in allergies.

Therefore, the need for developing sanitising/hygienising and acaricidal products capable of efficaciously and durably hindering the proliferation of allergenic and antihygienic pollutants, such as bacteria, moulds, fungi and mites, is deeply felt.

### Summary of the invention

It has surprisingly been found that compositions based on a binary mixture of 2-isopropyl-5-methylphenol/benzyl benzoate are particularly effective for inhibiting and removing fungi, bacteria, mites and moulds.

### Detailed description of the invention

It is an object of the present invention to provide compositions for the sanitisation/hygienisation of houses containing a binary mixture of 2-isopropyl-5-metylphenol/benzyl benzoate as active ingredient, suitable for the inhibition and removal of fungi, bacteria, mites and moulds from houses. Preferably, in the compositions of this invention, 2-isopropyl-5-methylphenol accounts for at least 0.01% w/w and benzyl benzoate for at least 0.15% w/w of the total composition content.

In particular benzyl benzoate, a component of the active ingredient according to the present invention, is present in its free form or in the form of resinous extracts of leguminous *Myroxylon pereirae,* available under the trademark Peru balm® or in the form of a fluid zedoary extract, available under the trademark Tolu balm®. The other component of the active ingredient according to the present invention, is 2-isopropyl-5-methylphenol or thymol, which is in the form of colourless or white translucent crystals and is available under the trademark Thymol Crystals®.

The aforementioned substances in the combined form exert an antibacterial and acaricidal action, and can remove mites remains, i.e. they are sanitising/hygienising agents preventing the onset of the allergies connected with enclosed spaces, such as houses, which are rich in ideal "grounds" for germs, bacteria, and mites proliferation, e.g. carpets, moquettes, mattresses, and tapestries for curtains, wardrobes, etc.

The compositions according to the present invention also include at least a flavouring agent selected from the group consisting of oils, essences, perfumes, and scents of natural and/or synthetic origin, used in cosmetic preparations, and/or a hygienising solvent selected from the group consisting of linear or branched aliphatic alcohols containing one to five carbon atoms, or mixtures thereof, and polyoxyalkylene glycols with alkyl groups containing one to four carbon atoms, or mixtures thereof.

The flavouring agent is preferably a citrus essence, and especially an essence based on a mixture of terpenes of citrus oils, commercially available as a raw material under the trademark Bam® perfume.

The hygienising solvent is preferably selected from the group consisting of polyoxyalkylene glycols with alkyl groups containing two to three carbon atoms, or mixtures thereof, and especially from the group consisting of propylene glycol, triethylene glycol, or mixtures thereof.

In a preferred embodiment of this invention, the composition contains 0.01 to 20% w/w, preferably 0.1 to 18% w/w, and especially 0.15 to 15% w/w 2-isopropyl-5-methylphenol; 0.15 to 60% w/w, preferably 0.2 to 55% w/w, and especially 0.25 to 50% w/w benzyl benzoate; 99.84% w/w to 20% w/w, preferably 99.7% w/w to 27% w/w, and especially 99.6 % w/w to 35% w/w essence based on a mixture of terpenes of citrus oils (BAM® perfume).

Still more preferred is the composition consisting of 2% w/w 2-isopropyl-5-methylphenol, 30% w/w benzyl benzoate, 68% w/w essence based on a mixture of terpenes of citrus oils (BAM^{(R)} perfume).

In a further preferred embodiment of this invention, the composition consists of 0.01 to 20% w/w, preferably 0.1 to 18% w/w, and especially 0.15 to 15% w/w 2-isopropyl-5-methylphenol; 0.15 to 60% w/w, preferably 0.2 to 55% w/w, and especially 0.25 to 50% w/w benzyl benzoate; 75% w/w to 10% w/w, preferably 74.9% w/w to 14% w/w, and especially 74.85% w/w to 20% w/w propylene glycol; 24.84% w/w to 10% w/w, preferably 24.8% w/w to 13% w/w, and especially 24.75% w/w to 15% w/w triethylene glycol.

Still more preferred is the composition consisting of 2% w/w 2-isopropyl-5-methylphenol, 30% w/w benzyl benzoate, 50% w/w propylene glycol, 18% w/w triethylene glycol.

In another particularly preferred embodiment of this invention, the composition consists of 0.01 to 20% w/w, preferably 0.1 to 18% w/w, and especially 0.15 to 15% w/w 2-isopropyl-5-methylphenol; 0.15 to 60% w/w, preferably 0.2 to 55% w/w, and especially 0.25 to 50% w/w benzyl benzoate; 59.94% w/w to 10% w/w, preferably 59.9% w/w to 13% w/w, and especially 59.5% w/w to 17% w/w essence based on a mixture of terpenes of citrus oils (BAM^{(R)} perfume); 14.95% w/w to 2.5% w/w, preferably 14.9% w/w to 4.5% w/w, and especially 14.87% w/w to 6.5% w/w triethylene glycol; 24.95% w/w to 7.5% w/w, preferably 24.9% w/w to 9.5% w/w, and especially 24.87% w/w to 11.5% w/w propylene glycol.

Particularly preferred is the composition consisting of 2% w/w 2-isopropyl-5-methylphenol, 30% w/w benzyl benzoate, 18% w/w propylene glycol, 10% w/w triethylene glycol, and a 40% w/w essence based on a mixture of terpenes of citrus oils (BAM^{(R)} perfume).

Preferably, the compositions containing the active ingredient according to the present invention may be in the form of granulates, spray solutions and water-soluble solutions, in which 2-isopropyl-5-methylphenol accounts for at least 0.01% w/w and benzyl benzoate for at least 0.15 % w/w of the total granulate, spray solution or water-soluble solution content.

The granulates include the compositions based on thymol/benzyl benzoate as active ingredient and a solid support made of homogeneous or variously sized grains, consisting of synthetic, animal or vegetable organic materials or inorganic materials, preferably obtained from a vegetable absorbent material selected from the group consisting of cellulosic fibres of grass of the family Gramineae, such as cereals, hay, fodder, preferably corncob. In said compositions, 2-isopropyl-5-methylphenol accounts for at least 0.01% w/w and benzyl benzoate for at least 0.15 % w/w of the total granulate content.

In particularly preferred embodiments of this invention, granulates contain 0.1% w/w 2-isopropyl-5-methylphenol, 0.2% w/w benzyl benzoate, and 10.7% w/w essence based on a mixture of terpenes of citrus oils (BAM^{(R)} perfume) in respect of the total granulate content, the rest consisting of the solid grains support, or contain 0.1% w/w 2-isopropyl-5-methylphenol, 0.2% w/w benzyl benzoate, 8.9% w/w essence based on a mixture of terpenes of citrus oil (BAM^{(R)} perfume), 0.9% w/w triethylene glycol, and 0.9% w/w propylene glycol in respect of the total granulate content, the rest consisting of the solid grains support.

The spray solution preferably include compositions based on the thymol/benzyl benzoate active ingredient and a solvent selected from the group consisting of hydroalcoholic mixtures based on water and linear or branched aliphatic alcohols containing one to five carbon atoms, the solvent being preferably selected from the group consisting of methyl, ethyl and propyl alcohols, and especially denatured ethyl alcohol for essences. In said spray solutions, 2-isopropyl-5-methylphenol accounts for at least 0.01% w/w and benzyl benzoate for at least 0.15% w/w of the total spray solution content.

In a particularly preferred embodiment of this invention, the spray solution consists of 10% w/w thymol/benzyl benzoate as active ingredient, 87% w/w denatured ethyl alcohol for essences, and 3% w/w water.

The water-soluble solutions preferably include the compositions based on thymol/benzyl benzoate as active ingredient and an emollient selected from the group consisting of polyoxyethylene esters of saturated and unsaturated fatty acids containing 8 to 18 carbon atoms, preferably PEG-7 glyceryl cocoate ester available under the trademark TEGOSOFT® GC and PEG-6 glyceric esters of caprylic and capric acids, available under the trademark TEGOSOFT® GMC 6, or mixtures thereof. In said water-soluble solutions, 2-isopropyl-5-methylphenol accounts for at least 0.01% w/w and benzyl benzoate for at least 0.15% w/w of the total water-soluble solution content.

In a particularly preferred embodiment of this invention, in the water-soluble solution 50% w/w consists of the compositions based on the thymol/benzlbenzoate as active ingredient and 50% w/w of an emollient, selected from the group consisting of PEG-7 glyceryl cocoate ester, available under the trademark TEGOSOFT® GC and PEG-6 glyceric ester of caprylic and capric acids, available under the trademark TEGOSOFT® GMC 6, or mixtures thereof.

According to a particularly preferred embodiment of this invention, the granulates and water-soluble solutions can be used in household cleaning appliances, i.e. vacuum cleaners for dust and particulate suction, steam jet appliances for the hygiene of washable surfaces, appliances for dedusting and washing carpets, moquettes and other washable surfaces with and without fabrics, as well as in household apparatus for air-conditioning, aeration and forced-air ventilation. In particular, the particulate added to the dust collecting bags acts as a hygienising agent, i.e. as a bactericide and acaricide, and prevents bacteria and mites from being re-introduced in the room with the air discharged from the vacuum cleaner. The particulate may be also fed to suitable air-conditioner compartments for recycle air hygienisation; the water soluble solutions may be fed to suitable compartments, or diluted in the water tanks, of the water- and steam-operating household appliances.

The following examples are conveyed by way of indication, not of limitation, of the present invention.

### Example 1

A terpene solution was prepared by mixing, according to techniques well known in the cosmetic/pharmaceutical art, thymol crystals, benzyl benzoate and the flavouring agent BAM® perfume so as to obtain a composition consisting of 2% by wt. thymol crystals, 30% by wt. benzyl benzoate, and 68% by wt. BAM® perfume, a citrus oils terpene mixture.

### Example 2

The "ANTIBACTERIAL" action of granulates consisting of a solid support of corncob grains and of the composition as per Example 1, present in varying by wt. per cent amounts, was determined by the MIC test (minimal inhibitory concentration) in a liquid medium.

Said tests allowed to ascertain whether the granulates exhibited a cosmetic "ANTIBACTERIAL" activity and, in particular, to determine the minimal concentration of the composition as per Example 1 adsorbed on corncob grains, which--after being conveyed to a culture medium through said grains, could inhibit the growth of representative genera of gram-positive, gram-negative bacteria and fungi.

The composition as per Example 1 was adsorbed on corncob grains to give granulates containing said composition at decreasing concentrations, i.e. 10%, 5%, 2% and 1%, 0.5%, 0.2%, 0.1%, 0.05%, 0.02%, 0.01% by wt. in respect of the final granulate total weight.

The test consisted in two steps. In the first step, Petri dishes with a complete culture medium were prepared and added with the same amounts of granulate containing decreasing concentrations of the composition as per Example 1. Some micro-organisms were inoculated to ascertain whether the granulate containing varying amounts of the composition as per Example 1 could immediately inhibit the bacterial load. Once the dishes were incubated, the colony-forming units (CFU), which survived in the presence of the bactericidal granulate, were counted.

In the second step, a further inoculation of micro-organisms into the same media without further granulate addition, was done one week from the first inoculation.

Various Petri dishes or capsules prepared with complete culture medium were added with equivalent amounts of granulates, respectively containing 10%, 5%, 2% and 1%, 0.5%, 0.2%, 0.1%, 0.05%, 0.02%, 0.01% by wt. of the composition as per Example 1.

Inocula of 10⁶ micro-organisms of the following genera were suspended on the Petri dishes' culture media:
*Escherichia Coli, Pseudomonas aeruginosa, Staphylococcus aureus e Candida albicans.*

At the time of micro-organisms inoculation, the following CFUs of bacteria and fungi per Petri dish were obtained:
10³ CFU/ml of S. aureus
10² CFU/ml of P. aeruginosa
10² CFU/ml of E. coli
10³ CFU/ml of C. albicans.

Microbiological controls were performed once bacteria had been incubated for 24 hours and fungi for 72 hours.

The minimal concentration that caused an immediate and significant bacterial growth inhibition was assessed.

As shown in the following table, bacteria growth was already inhibited at a 0.5% by wt. concentration of the composition as per Example 1.

Therefore, said concentration is the minimal bactericide and fungicide concentration present in the granulate, which inhibits the growth of the bacteria present in a culture medium. It was also observed that, with a further inoculation of micro-organisms into the same Petri dishes containing 0.5% by wt. of the composition as per Example 1, no growth of said micro-organisms took place even after one week.

Said granulate, at a one-week distance, is still an active fungicide and bactericide.

**Table 1**

| Micro-organisms | S. aureus | P. aeruginosa | E. coli | C. albicans |
|---|---|---|---|---|
| INOCULUM (cfu/ml) | 1.00E+03 | 1.00E+02 | 1.00E+02 | 1.00E+03 |
| 0.01% | Growth | Growth | Growth | Growth |
| 0.02% | Growth | Growth | Growth | Growth |
| 0.05% | Growth | Growth | Growth | Growth |
| 0.1% | Growth | Growth | Growth | Growth |
| 0.2% | Growth | Growth | Growth | Growth |
| 0.5% | Growth | Growth | Growth | Growth inhibited |
| | inhibited | inhibited | inhibited | |
| 1% | Growth | Growth | Growth | Growth inhibited |
| | inhibited | inhibited | inhibited | |
| 2% | Growth | Growth | Growth | Growth inhibited |
| | inhibited | inhibited | inhibited | |
| 5.00% | Growth | Growth | Growth | Growth inhibited |
| | inhibited | inhibited | inhibited | |
| 10.00% | Growth | Growth | Growth | Growth inhibited |
| | inhibited | inhibited | inhibited | |

### Example 3

15 g of granulates containing 10% by wt. of the composition as per Example 1 was placed into a 30x25x25 cm box and kept in a 4 atm air stream for 20 hrs.

Once said treatment was completed, the granulate was treated with 30 ml methanol. The resulting alcoholic mixture was analysed by GS/MS method using-- as a standard--the terpene mixture (BAM® perfume), i.e. the most volatile component (b.p. 170°C to 180°C) of the composition as per Example 1.

The analysis was conducted on a 30 cm DB 5 column with a temperature range of 40°C to 280°C with 10°C variations/minute. The per cent residue of the high volatility terpene mixture used as a reference, accounted for 9.4% by wt. of the total granulate content.

As may be inferred from the analysis of the data obtained, the composition as per Example 1, after being kept in a 4 atm air stream for 20 hours, is still present in the granulate in an amount approximating 10% by weight.

### Example 4

A spray solution consisting of 10% by wt. of the composition as per Example 1, was prepared by solubilising said composition in denatured ethyl alcohol.

The acaricidal action of the spray solution was evaluated by applying same to a wool carpet whereon living mites had been placed.

The acaricidal action was assessed from the mites death-rate vs. time, i.e. 6 and 24 hrs from the application of the spray solution to the carpet.

A preset number of mites was uniformly distributed on a 2x2 m Turkish wool carpet (Kars). The carpet was subdivided into two 1x2 m sections (A and B).

Section A was treated with the aforesaid spray solution, whereas section B remained untreated.

The sections were further subdivided into 16 0.25 m wide sectors: 8 were numbered from 1 to 8 (section A) and 8 from 9 to 16 (section B).

Four sectors per section were selected: to each of them, 10 strips of 5x5 cm 3M adhesive tape were applied by pressure for 10 minutes.

Five strips selected at random from the aforesaid 10 strips were removed and analysed by a 20 X binocular microscope, and the living mites and remains were counted.

This procedure allowed the detection of the average number of living mites and remains on 5x5 cm portions of the selected sectors of sections A and B, before and after application of the spray composition.

The average number of living mites and remains present on 5x5 cm portions of the two sections (A and B) before application of the spray composition is as follows:

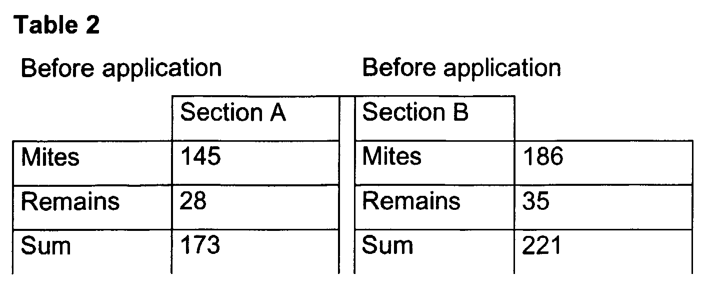

While section B was covered, 2.5 g of the spray solution was sprayed on the four sectors of section A selected at random. The number of living mites and remains present 6 and 24 hours after application of the acaricidal composition on the treted sectors of section A, and on the sectors of untreated section B are indicated below:

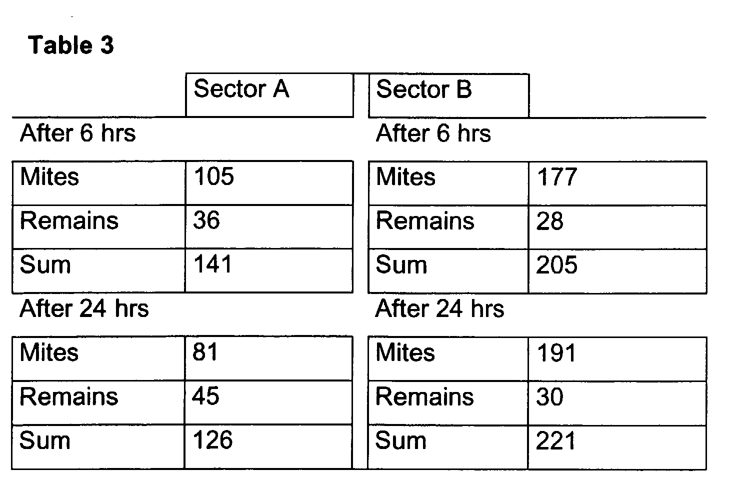

The tables clearly show that the spray solution exerts an acaricidal action, which significantly modifies the number of living mites present on the treated carpet portion in respect of the untreated carpet portion, and contributes to the removal of remains. In fact, the % decrease in living mites with time (-27.6% after 6 hours and -44.1% after 24 hours) is higher than the % increase in remains with time (+22% after 6 hours and +37% after 24 hours).

## Claims

1. Sanitising/hygienising compositions comprising a binary mixture of 2-isopropyl-5-metylphenol/benzyl benzoate as active ingredient, suitable for inhibiting and removing fungi, bacteria, mites and moulds from houses.

2. Compositions according to claim 1, wherein 2-isopropyl-5-methylphenol accounts for at least 0.01% w/w and benzyilbenzoate for at least 0.15% w/w of the total composition content.

3. Compositions according to claim 1, wherein benzyl benzoate is present in its free form or in the form of resinous extracts of leguminous *Myroxylon pereirae,* available under the trademark Peru balm® or in the form of a fluid zedoary extract, available under the trademark Tolu balm®.

4. Compositions according to claim 1, wherein 2-isopropyl-5-methylphenol is in the form of colourless or white translucent crystals and is available under the trademark Thymol Crystals®.

5. Compositions according to claim 1 further comprising at least a flavouring agent selected from the group consisting of oils, essences, perfumes, and scents of natural and/or synthetic origin and/or a hygienising solvent selected from the group consisting of linear or branched aliphatic alcohols containing one to five carbon atoms, or mixtures thereof, and polyoxyalkylene glycols with alkyl groups containing one to four carbon atoms, or mixtures thereof.

6. Compositions according to claim 5, wherein the flavouring agent is a citrus essence.

7. Compositions according to claim 6, wherein the flavouring agent is an essence based on a mixture of terpenes of citrus oils (BAM® perfume).

8. Compositions according to claim 7 consisting of 0.01 to 20% w/w, preferably 0.1 to 18% w/w, and especially 0.15 to 15% w/w 2-isopropyl-5-methylphenol; 0.15 to 60% w/w, preferably 0.2 to 55% w/w, and especially 0.25 to 50% w/w benzyl benzoate; 99.84% w/w to 20% w/w, preferably 99.7% w/w to 27% w/w, and especially 99.6 % w/w to 35% w/w essence based on a mixture of terpenes of citrus oils (BAM® perfume).

9. Composition according to claim 8 consisting of 2% w/w 2-isopropyl-5-methylphenol, 30% w/w benzyl benzoate, 68% w/w essence based on a mixture of terpenes of citrus oils (BAM^{(R)} perfume).

10. Compositions according to claim 5, wherein hygienising solvent is selected from the group consisting of polyoxyalkylene glycols with alkyl groups containing two to three carbon atoms, or mixtures thereof.

11. Compositions according to claim 10, wherein the solvent is selected out of propylene glycol, triethylene glycol, and mixtures thereof.

12. Compositions according to claim 11 consisting of 0.01 to 20% w/w, preferably 0.1 to 18% w/w, and especially 0.15 to 15% w/w 2-isopropyl-5-methylphenol; 0.15 to 60% w/w, preferably 0.2 to 55% w/w, and especially 0.25 to 50% w/w benzyl benzoate; 75% w/w to 10% w/w, preferably 74.9% w/w to 14% w/w, and especially 74.85% w/w to 20% w/w propylene glycol; 24.84% w/w to 10% w/w, preferably 24.8% w/w to 13% w/w, and especially 24.75% w/w to 15% w/w triethylene glycol.

13. Composition according to claim 12 consisting of 2% w/w 2-isopropyl-5-methylphenol, 30% w/w benzyl benzoate, 50% w/w propylene glycol, and 18% w/w triethylene glycol.

14. Compositions according to claim 5 consisting of 0.01 to 20% w/w, preferably 0.1 to 18% w/w, and especially 0.15 to 15% w/w 2-isopropyl-5-methylphenol; 0.15 to 60% w/w, preferably 0.2 to 55% w/w, and especially 0.25 to 50% w/w benzyl benzoate; 59.94% w/w to 10% w/w, preferably 59.9% w/w to 13% w/w, and especially 59.5% w/w to 17% w/w essence based on a mixture of terpenes of citrus oils (BAM^{(R)} perfume); 14.95% w/w to 2.5% w/w, preferably 14.9% w/w to 4.5% w/w, and especially 14.87% w/w to 6.5% w/w triethylene glycol; 24.95% w/w to 7.5% w/w, preferably 24.9% w/w to 9.5% w/w, and especially 24.87% w/w to 11.5% w/w propylene glycol.

15. Composition according to claim 14 consisting of 2% w/w 2-isopropyl-5-methylphenol, 30% w/w benzyl benzoate, 18% w/w propylene glycol, 10% w/w triethylene glycol, and a 40% w/w essence based on a mixture of terpenes of citrus oils (BAM^{(R)} perfume).

16. Granulates comprising the compositions according to claim 1 and a solid support made of homogeneous or variously sized grains, consisting of synthetic, animal or vegetable organic materials or inorganic materials.

17. Granulates according to claim 16, wherein 2-isopropyl-5-methyphenol accounts for at least 0.01% w/w and benzyl benzoate for at least 0.15% w/w of the total granulate content.

18. Granulates according to claim 16, wherein the solid support is made of grains of vegetable absorbent material selected from the group consisting of cellulosic fibres of grass of the family Gramineae: cereals, hay, fodder, preferably corncob, and 2-isopropyl-5-methylphenol accounts for at least 0.01 % w/w and benzyl benzoate for at least 0.15 % w/w of the total granulate content.

19. Granulates according to claim 18, wherein the solid grain support is corncob.

20. Granulates according to claim 17, wherein 2-isopropyl-5-methylphenol accounts for 0.1% w/w, benzyl benzoate for 0.2% w/w, and the essence based on a mixture of terpenes of citrus oils (BAM^{(R)} perfume) for 10.7% w/w of the total granulate content, the rest consisting of the solid grains support.

21. Granulates according to claim 17, wherein 2-isopropyl-5-methylphenol accounts for 0.1% w/w, benzyl benzoate for 0.2% w/w., the essence based on a mixture of terpenes of citrus oils (BAM^{(R)} perfume) for 8.9% w/w, triethylene glycol for 0.9% w/w and propylene glycol for 0.9% w/w of the total granulate content, the rest consisting of the solid grains support.

22. Spray solutions comprising the compositions according to claim 1 and a solvent selected from the group consisting of hydroalcoholic mixtures based on water and of linear or branched aliphatic alcohols containing one to five carbon atoms, in which 2-isopropyl-5-methylphenol accounts for at least 0.01% w/w and benzyl benzoate for at least 0.15% w/w of the total spray solution content.

23. Spray solutions according to claim 22, wherein the solvent is selected from the group consisting of methyl, ethyl and propyl alcohol.

24. Spray solutions according to claim 23, wherein the solvent is denatured ethyl alcohol for essences.

25. Spray solution according to claim 24, wherein the compositions according to claim 1 account for 10% w/w, denatured ethyl alcohol for 87% w/w, and water for 3% w/w.

26. Water-soluble solutions comprising the compositions according claim 1 and an emollient selected from the group consisting of polyoxyethylene esters of saturated and unsaturated fatty acids containing 8 to 18 carbon atoms, in which 2-isopropyl-5-methylphenol accounts for at least 0.01% w/w and benzyl benzoate for at least 0.15% w/w of the total water-soluble solution content.

27. Water-soluble solutions according to claim 26, wherein the emollient is selected from the group consisting of PEG-7 glyceryl cocoate ester (TEGOSOFT® GC) and PEG-6 glyceric esters of caprylic and capric acids (TEGOSOFT® GMC 6), or mixtures thereof.

28. Water-soluble solutions according to claim 26, wherein the compositions according to claim 1 accounts for 50% w/w and the emollient for 50% w/w.

29. Water-soluble solutions according to claim 28, wherein the emollient is selected from the group consisting of PEG-7 glyceryl cocoate ester (TEGOSOFT® GC) and PEG-6 glyceric esters of caprylic and capric acids (TEGOSOFT® GMC 6), or mixtures thereof.

30. Use of the granulates according to claim 16 in household cleaning appliances and apparatus for air-conditioning, aeration, and forced-air ventilation of houses.

31. Use of the water-soluble solutions according to claim 26 in household cleaning appliances and apparatus for air-conditioning, aeration, and forced-air ventilation.
